(19) Europäisches Patentamt — European Patent Office — Office européen des brevets

(11) **EP 2 035 588 B1**

(12) **FASCICULE DE BREVET EUROPEEN**

(45) Date de publication et mention de la délivrance du brevet:
**09.11.2016 Bulletin 2016/45**

(21) Numéro de dépôt: **07803773.6**

(22) Date de dépôt: **26.06.2007**

(51) Int Cl.:
*C21D 9/60* *(2006.01)*   *C21D 1/42* *(2006.01)*
*C21D 9/573* *(2006.01)*   *F27B 9/28* *(2006.01)*
*C21D 9/56* *(2006.01)*   *F27D 99/00* *(2010.01)*

(86) Numéro de dépôt international:
**PCT/FR2007/001059**

(87) Numéro de publication internationale:
**WO 2008/000945 (03.01.2008 Gazette 2008/01)**

(54) **DISPOSITIF DE SÉCURISATION D'UN FOUR ÉQUIPÉ D'UN CHAUFFAGE ET D'UN REFROIDISSEMENT RAPIDES FONCTIONNANT SOUS ATMOSPHÈRE CONTRÔLÉE.**

SICHERUNGSVORRICHTUNG EINES OFENS MIT ANORDNUNG ZUR SCHNELLEN ERHITZUNG UND ABKÜHLUNG, DER UNTER KONTROLLIERTER ATMOSPHÄRE BETRIEBEN WIRD

DEVICE FOR SECURING A FURNACE PROVIDED WITH A RAPID HEATING AND COOLING SYSTEM OPERATING UNDER CONTROLLED ATMOSPHERE.

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **30.06.2006 FR 0605932**

(43) Date de publication de la demande:
**18.03.2009 Bulletin 2009/12**

(73) Titulaire: **FIVES STEIN**
**94701 Maison Alfort Cedex (FR)**

(72) Inventeurs:
• **CLUZEL, Xavier**
**F-75005 Paris (FR)**
• **GAILLARD, Christian**
**F-94700 Maisons Alfort (FR)**
• **JODET, Gérard**
**F-17630 La Flotte En Re (FR)**
• **MARMONIER, Frédéric**
**F-94420 Vaucresson (FR)**

(74) Mandataire: **Cabinet Armengaud Aîné**
**16, rue Gaillon**
**75002 Paris (FR)**

(56) Documents cités:
**EP-A- 0 311 030    WO-A-00/52965**
**FR-A- 2 629 188    FR-A1- 2 809 418**

**Description**

La présente invention concerne des perfectionnements apportés aux sections de lignes continues de traitement thermique de bandes métalliques équipées de sections de chauffage et de refroidissement rapides.

Par chauffage et refroidissement rapide on désigne un chauffage ou un refroidissement selon un gradient de température égal ou supérieur à 100°C/s.

L'invention se propose tout particulièrement de réduire le risque de formation d'atmosphère explosive dans les sections de la ligne dans lesquelles est présente une atmosphère constituée d'un mélange de gaz inerte, généralement d'azote, et d'hydrogène.

On connaît le document WO 00/52965 A qui divulgue un dispositif permettant de limiter le risque de formation d'une atmosphère explosive dans le four d'une ligne continue de traitement thermique selon le préambule de la revendication 1. Cependant, ce dispositif présente l'inconvénient de permettre une introduction d'air dans le four lors d'une dépressurisation rapide de celui-ci. Un but de l'invention est de résoudre ce problème.

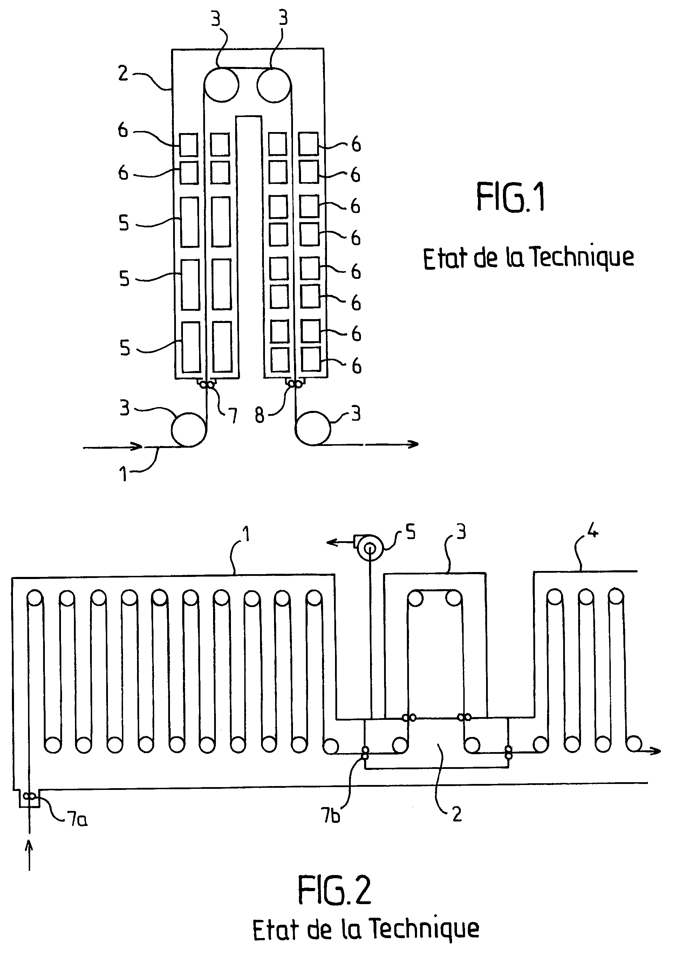

Afin de bien situer le domaine technique auquel s'applique la présente invention, on se réfère en premier lieu à la Figure 1 des dessins annexés qui représente de façon schématique un exemple connu de ligne continue de traitement thermique de bandes métalliques équipée de sections de chauffage et de refroidissement rapides, selon l'état de la technique.

Sur cette Figure 1 on voit qu'une bande 1 traverse un four 2, dans lequel se trouve une atmosphère de protection, en passant sur plusieurs rouleaux déflecteurs 3. L'étanchéité du four est assurée par un dispositif d'entrée 7 et un dispositif de sortie 8. Durant la traversée du four 2, la bande 1 est exposée successivement à des moyens de chauffage 5 et des moyens de refroidissement 6, positionnés de part et d'autre de la bande.

L'atmosphère de protection présente dans le four est destinée à éviter l'oxydation de la bande lors du cycle de chauffage à haute température et de refroidissement. Elle est généralement constituée d'un mélange de gaz inerte, en particulier d'azote, et d'hydrogène, le caractère réducteur de cette atmosphère permettant de réduire les éventuels oxydes présents à la surface de la bande. La teneur en hydrogène est supérieure ou égale à 4%. Une atmosphère à haute teneur en hydrogène, souvent comprise entre 20% et 75% d'hydrogène, est utilisée sur de nombreuses lignes continues dans les sections de refroidissement afin d'accroître les performances du refroidissement par convection. Sur les lignes de recuit brillant de bandes en acier inoxydable, une teneur en hydrogène allant jusqu'à 95% est utilisée pour obtenir les propriétés de surface requises.

La pression dans le four est supérieure à la pression atmosphérique afin d'éviter les entrées d'air, plus précisément les entrées d'oxygène, dans le four. La présence d'oxygène dans le four est à exclure pour des raisons de sécurité afin d'éviter tout risque de formation d'une atmosphère explosive. La présence d'oxygène est également à exclure pour des raisons de qualité de surface, l'oxygène pouvant provoquer la formation d'oxydes sur la bande.

Le dispositif d'entrée 7 et le dispositif de sortie 8 permettent de limiter les sections ouvertes d'entrée et de sortie du four afin de réduire le débit de fuite et donc la consommation en atmosphère du four. Ces dispositifs sont généralement des sas à rouleaux ou à volets. Ces dispositifs n'étant que d'une étanchéité relative, la pression dans le four doit être aussi réduite que possible afin de limiter la quantité de gaz d'atmosphère s'échappant à l'extérieur du four au voisinage de ces dispositifs et de réduire la consommation en atmosphère du four.

La surpression du four par rapport à la pression atmosphérique permet également de pallier aux variations de pression liées aux contractions d'atmosphères durant les changements de format de bande, les changements de cycles thermiques ou les changements de vitesse de la ligne ou lors d'incidents tels que par exemple un arrêt d'urgence ou une casse de bande. Si le four passait en dépression, une entrée d'air dans le four se produirait par le dispositif d'entrée 7 et le dispositif de sortie 8. La présence d'oxygène dans l'atmosphère à haute teneur en hydrogène du four entraînerait un risque important de formation d'une atmosphère explosive dans le four. La présence simultanée d'une atmosphère explosive et de points d'ignition de l'explosion que sont les points chauds présents dans le four, ne serait-ce que la bande, accentue le risque d'explosion.

Dans un four traditionnel équipé d'une section de chauffage à résistances électriques ou d'équipements de combustion tels que des brûleurs à flamme nue ou des tubes radiants gaz, le volume important de la section de chauffage et sa forte capacité calorifique font tampon et permettent d'éviter que le four ne passe en dépression.

Selon un exemple de four traditionnel réalisé selon l'état de la technique, comme représenté sur la Figure 2 extraite du brevet FR 2 809 418 de la société demanderesse, une section 2 permet la séparation d'atmosphère entre la section 1 de chauffage à faible teneur en hydrogène et la section 3 de refroidissement rapide à haute teneur en hydrogène. Une extraction 5 réalisée dans la section 2 permet de maintenir cette section à une pression légèrement plus faible que celle des sections 1 et 3 afin que l'écoulement d'atmosphère entre ces sections se fasse des sections 1 et 3 vers la section 2. Une forte dépression dans la section de refroidissement 3 consécutive à une contraction de son atmosphère se traduit par un écoulement de l'atmosphère de la section 2 vers la section 3 et à une dépression de la section 2. Ensuite, la dépression de la section 2 se traduit par un écoulement de l'atmosphère de la section 1 vers la section 2. L'important volume d'atmosphère contenu dans cette section 1 permet de compenser la dépression dans les sections 2 et 3 tout en conservant une pression positive dans le four ce qui évite l'entrée d'air et donc la formation d'une atmosphère explosive. Par ailleurs, la distance importante entre le dispositif 7a d'entrée de bande dans le four et le dispositif 7b d'entrée de la bande dans la section 2 permet de réduire le risque d'entrée d'air dans la section 3 à haute teneur en hydrogène dans le cas d'une entrée d'air dans le four par le dispositif 7a.

Selon cet exemple de ligne continue réalisée selon l'état de la technique représenté sur la Figure 2, une section 4 à basse teneur en hydrogène de refroidissement lent ou de maintien avant le refroidissement final est implantée en aval de la section 3 de refroidissement rapide à haute teneur en hydrogène. Tout comme pour la section de chauffe 1, cette section 4 joue le rôle de volume tampon en cas de contraction d'atmosphère dans la section 3.

Selon un autre exemple de ligne continue réalisée selon l'état de la technique, comme représenté sur la Figure 3 extraite du même brevet FR 2 809 418, lorsque la ligne ne comprend pas de section 4 en aval de la section 3 de refroidissement à haute teneur en hydrogène, le dispositif 8b de sortie de la bande du four est placé du côté de la section de chauffe afin que celle-ci joue le rôle de volume tampon et la distance entre les dispositifs 8a et 8b est importante pour réduire le risque d'entrée d'air dans la section 3 à haute teneur en hydrogène dans le cas d'une entrée d'air dans le four par le dispositif 8b.

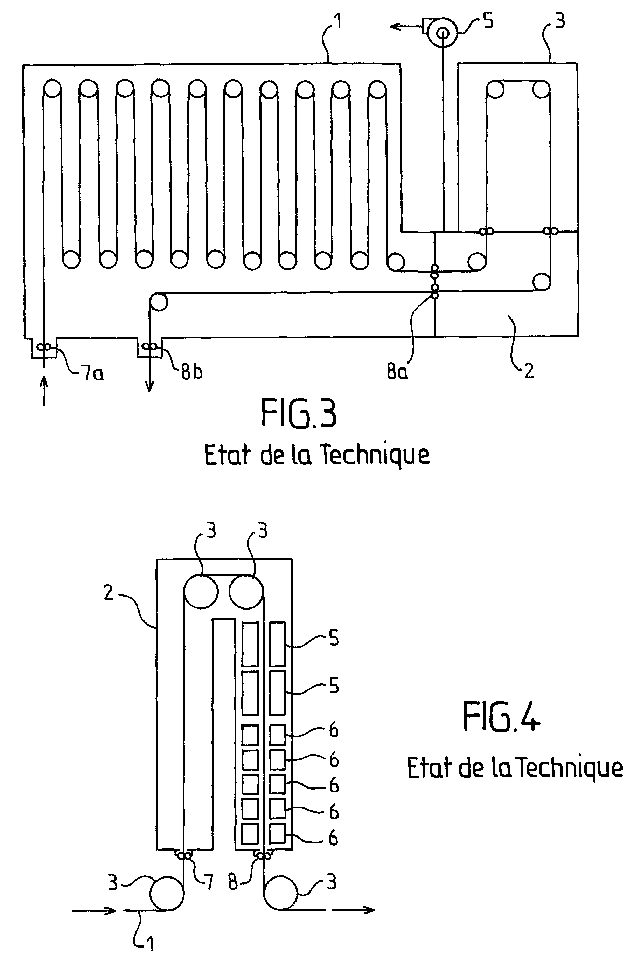

L'importance des volumes tampons dans les lignes représentées en Figure 2 et Figure 3 permet de limiter la pression relative (c'est-à-dire par rapport à la pression atmosphérique) dans le four à environ 20 daPa sans risque de passer en dépression en cas de contraction d'atmosphère dans la section de refroidissement.

Dans le cas des lignes de recuit brillant de l'acier inoxydable réalisées selon l'état de la technique, la configuration du four est telle que représentée en Figure 4.

Sur cette Figure 4 on voit que la bande 1 traverse le four 2 dans lequel se trouve une atmosphère de protection à haute teneur en hydrogène, typiquement 95%, en passant sur plusieurs rouleaux déflecteurs 3. L'étanchéité du four est assurée par un dispositif d'entrée 7 et un dispositif de sortie 8. Durant la traversée du four 2, la bande 1 est exposée successivement à des moyens de chauffage 5 et des moyens de refroidissement 6, positionnés de part et d'autre de la bande. Le recuit brillant de l'acier inoxydable nécessite que le chauffage et le refroidissement de la bande soient réalisés sur le même brin vertical pour éviter tout contact de la bande avec les rouleaux au-delà d'une certaine température de bande, préjudiciable à la qualité de surface requise. Sur cet exemple de réalisation, les moyens de chauffage et de refroidissement sont placés sur la passe descendante, dans un autre exemple de réalisation, ils le seraient dans la passe montante.

Les lignes de recuit brillant réalisées selon l'état de la technique sont généralement équipées de dispositifs de chauffage 5 radiatifs constitués de résistances moulées. Du fait de la contrainte d'implantation sur un seul brin vertical et de la hauteur maximale de ce brin limitée pour être compatible avec la résistance mécanique de la bande à la température de recuit, la faible densité de puissance des résistances moulées conduit à des lignes de faible capacité avec de faibles vitesses de défilement.

Contrairement aux lignes décrites en Figure 2 et Figure 3, les lignes de recuit brillant réalisées selon l'état de la technique ne disposent pas de volumes tampons à faible teneur en H2 pour compenser une éventuelle contraction de l'atmosphère consécutive à une rupture de bande. Néanmoins, la forte inertie thermique des moyens de chauffage mis en oeuvre et la faible capacité de production de la ligne font que la contraction d'atmosphère est réduite. Pour limiter le risque d'entrée d'air dans le four, la pression relative du four est ainsi simplement portée dans les lignes de recuit brillant aux environs de 60 à 70 daPa.

On explique à présent pourquoi les solutions mises en oeuvre pour limiter le risque de formation d'une atmosphère explosive sur les lignes traditionnelles équipées de moyens de chauffage « lents» ne sont pas adaptées pour les fours équipés de moyens de chauffage et de refroidissement rapides, c'est-à-dire fonctionnant suivant des gradients de température en fonction du temps (positifs ou négatifs) égaux ou supérieurs en valeur absolue à 100°C/s.

Un four de ligne continue de traitement thermique de bandes métalliques équipé d'une section de chauffage rapide, par exemple avec un chauffage par induction à flux longitudinal ou à flux transverse, est, à capacité de ligne identique, de petite dimension en comparaison d'un four avec une section de chauffage équipée de résistances électriques ou d'équipements de combustion tels que des brûleurs à flamme nue ou des tubes radiants gaz. Le volume de l'atmosphère N2H2 contenue dans une section de chauffage par induction est donc beaucoup plus faible que celui contenu dans une section de chauffage traditionnelle. Ce faible volume d'atmosphère ne permet pas de jouer le rôle de volume tampon en cas de contraction d'atmosphère comme dans un four traditionnel.

Par ailleurs, l'ambiance des sections de chauffage par induction est « froide » en comparaison des sections de chauffage traditionnelles où l'échange par rayonnement ou convection nécessite des ambiances à haute température. De même, une section de chauffage par induction se caractérise par une très faible inertie thermique, la mise en service et l'arrêt du chauffage étant pratiquement instantanés. En comparaison, les sections de chauffage traditionnelles ont une grande inertie thermique du fait de la masse importante de matériaux portée à haute température et donc du temps nécessaire pour monter en température les équipements de chauffe lors de la mise en service du four ou leur refroidissement en cas d'arrêt du four. De ce fait, contrairement aux sections de chauffage traditionnelles, la section de chauffage rapide par induction apporte peu de calories après l'arrêt du chauffage pour contrer le refroidissement de l'atmosphère

**EP 2 035 588 B1**

dans la section de refroidissement rapide et limiter le niveau de dépression atteint dans le four.

Les lignes continues de traitement thermique de bandes métalliques de forte capacité ont des vitesses de défilement de bande importante, par exemple de 100 à 800 m/min, avec des puissances de chauffe installées importantes, généralement de plusieurs mégawats. Pour permettre le refroidissement rapide de la bande, ces lignes sont équipées de sections de refroidissement rapides par convection sous une atmosphère composée d'un mélange d'azote et d'hydrogène riche en hydrogène, par exemple 30 à 100% d'hydrogène. Ces sections de refroidissement sont équipées de moto ventilateurs centrifuges permettant le soufflage du gaz au travers de caissons de refroidissement. Après échange avec la bande, le gaz chaud est repris à l'aspiration du ventilateur, refroidi au travers d'un échangeur à eau avant d'être à nouveau soufflé sur la bande. Les performances importantes des sections de refroidissement et la forte capacité de production de ces lignes requièrent de souffler sur la bande un volume important d'atmosphère, d'où la mise en oeuvre de moto ventilateurs de puissance importante et de vitesses nominales de rotation de la turbine généralement élevées.

Sur une ligne de forte capacité dont le chauffage est par induction, l'arrêt brutal du chauffage par exemple à la suite d'une rupture de bande ou d'un arrêt d'urgence se traduit par la suppression quasi instantanée de l'apport calorifique à la bande. L'arrêt des ventilateurs est déclenché dès la détection par le système de contrôle de la ligne de l'arrêt du défilement de la bande ou l'arrêt du chauffage. Néanmoins, du fait de leur inertie mécanique, l'arrêt des moto ventilateurs nécessite plusieurs minutes. Le décalage existant entre l'arrêt quasi instantané du chauffage par induction et l'arrêt du refroidissement se traduit par un refroidissement très rapide du débit d'atmosphère H2N2 circulant dans les circuits de refroidissement car la puissance échangée dans les échangeurs à eau reste équivalente à celle apportée par l'induction. Le refroidissement très rapide de l'atmosphère juste après l'arrêt de la chauffe se traduit par une très forte contraction de l'atmosphère ce qui provoque le passage en forte dépression de la section de refroidissement, mais également quasi instantanément de l'ensemble du four.

On désigne par T le temps qui s'écoule entre la mise en dépression du four par arrêt brutal du chauffage et l'instant où la pression dans le four retrouve la valeur de la pression atmosphérique.

Par ailleurs, dans le cas des lignes continues équipées de sections de chauffage par induction et de refroidissement rapides , l'importance du niveau de dépression atteint dans le four est accentuée par la combinaison :

- d'un faible volume de four lié à la compacité de la section de chauffage par induction par rapport aux sections de chauffage traditionnelles par résistances électriques ou équipements de combustion,

- d'une section de chauffage « froide » apportant peu de calories après l'arrêt du chauffage pour contrer le refroidissement de l'atmosphère dans la section de refroidissement,

- d'un débit important d'atmosphère re-circulée dans la section de refroidissement au travers des échangeurs à eau pour obtenir la capacité d'échange requise, d'où un refroidissement très rapide du faible volume d'atmosphère du four,

- d'une puissance calorifique installée importante liée au tonnage important de la ligne d'où une forte capacité frigorifique disponible pour refroidir très rapidement le faible volume d'atmosphère du four lors de l'arrêt brutal de l'induction.

Dans les lignes continues de traitement thermique de bandes métalliques équipées de sections de chauffage par induction et de refroidissement rapides, la dépression relative obtenue juste après l'arrêt du chauffage pourrait ainsi atteindre un niveau très important. L'augmentation de la pression nominale de fonctionnement du four qui serait requise pour compenser cette dépression et éviter que le four ne passe en dépression n'est pas réalisable industriellement en raison de la fuite importante d'atmosphère qu'elle provoquerait au niveau du dispositif d'entrée et du dispositif de sortie, d'où un risque important de formation d'un grand volume d'atmosphère explosive à l'extérieur du four au voisinage de ces dispositifs et une consommation excessive en atmosphère entraînant une hausse du coût de production de la ligne pouvant compromettre la rentabilité de l'installation.

Un four à induction de forte capacité équipé d'une section de refroidissement rapide sous haute teneur en hydrogène augmente donc très fortement le risque d'explosion de l'atmosphère du four en cas d'arrêt brutal de la ligne par rapport à une ligne traditionnelle équipée d'une section de chauffage de grande dimension équipée de résistances électriques ou d'équipements de combustions.

L'invention propose une solution à ce problème technique de sorte de limiter le risque de formation d'une atmosphère explosive dans le four.

Selon l'invention, un dispositif permettant de limiter le risque de formation d'une atmosphère explosive dans le four d'une ligne continue de traitement thermique de bandes métalliques dont les sections sont sous une atmosphère constituée d'un mélange de gaz inerte et d'hydrogène dont la teneur volumique en hydrogène est comprise entre 5 et 100%, équipé d'une section de chauffage rapide à induction et d'une section de refroidissement rapide, est caractérisé en ce qu'il comprend :

- une chambre maintenue sous gaz inerte, à l'entrée de la section de chauffage rapide du four et à la sortie de la section de refroidissement rapide, la pression dans la chambre étant supérieure à la pression atmosphérique lorsque le chauffage du four fonctionne normalement,
- un dispositif d'entrée de la bande dans la chambre, à partir de l'air atmosphérique,
- un dispositif de séparation d'atmosphère et d'entrée de la bande dans la section de chauffage du four depuis la chambre sous gaz inerte, ce dispositif étant équipé d'un soutirage de gaz,
- un dispositif de séparation d'atmosphère et de sortie de la bande de la section de refroidissement rapide du four, équipé d'un soutirage de gaz, et
- un dispositif de sortie de la bande de la chambre vers l'air atmosphérique.

De préférence, la pression relative dans la chambre maintenue sous gaz inerte, lorsque le chauffage du four fonctionne normalement, est au moins égale à 20 daPa. La pression dans la chambre est généralement égale ou légèrement supérieure à la pression de gaz dans le four, par exemple de 2 daPa.

Le gaz inerte peut être de l'azote. De préférence, la distance entre le dispositif d'entrée de la bande dans la chambre et le dispositif de séparation d'atmosphère et d'entrée de la bande dans la section de chauffage rapide du four, d'une part, et entre le dispositif de séparation d'atmosphère et de sortie de la bande de la section de refroidissement rapide du four, et le dispositif de sortie de la bande de la chambre, d'autre part, est supérieure à la longueur du panache d'air créé dans la chambre en cas de dépression dans le four provoqué par un arrêt brutal du chauffage. Avantageusement, la longueur à un instant donné du panache d'air créé dans la chambre est choisie comme étant la longueur suivant l'axe du panache de l'enveloppe définie par une iso-concentration en air dans le gaz inerte égale à celle qui correspondrait à la Limite Supérieure d'Explosivité s'il s'agissait d'un mélange entre l'air et l'atmosphère présente (gaz inerte + H2) dans le four.

Le volume de la chambre est de préférence supérieur ou égal au volume pour lequel le débit d'air entrant jusqu'à l'instant où la pression dans le four redevient égale à la pression atmosphérique conduirait à une concentration en air dans le gaz inerte dans ce volume égale à celle qui correspondrait à la Limite Supérieure d'Explosivité s'il s'agissait d'un mélange entre l'air et l'atmosphère (gaz inerte + H2) présente dans le four.

Les dispositifs destinés à réaliser une séparation d'atmosphère entre le four et la chambre peuvent comprendre deux ensembles de deux rouleaux ou de volets situés de part et d'autre de la bande et une extraction de l'atmosphère est réalisée entre les deux ensembles de rouleaux et/ou volets de sorte que les écoulements d'atmosphère se fassent du four vers l'extraction et de la chambre vers l'extraction sans échange d'atmosphère entre le four et la chambre. De préférence, les dispositifs d'entrée et de sortie et les dispositifs de séparation d'atmosphère sont à la même altitude afin que les pressions de gaz en amont et en aval de ces dispositifs soient identiques.

Un tunnel de liaison peut être prévu en partie basse du four entre le brin montant du four et le brin descendant afin de mettre en communication l'atmosphère des brins montant et descendant en partie basse du four pour participer à l'équilibrage des pressions et réduire le débit de soutirage requis au niveau des dispositifs de séparation d'atmosphère. Un ou plusieurs points d'injection d'azote dans la chambre et un ou plusieurs points d'injection de gaz inerte, notamment d'azote, dans le four peuvent être prévus.

Le dispositif peut comporter une succession de plusieurs chambres avec des dispositifs de séparation d'atmosphère entre chacune de ces chambres.

Le dispositif peut comporter deux chambres distinctes, une en entrée de four, la seconde en sortie de four.

L'invention concerne également un procédé permettant de limiter le risque de formation d'une atmosphère explosive dans le four d'une ligne continue de traitement thermique de bandes métalliques dont les sections sont sous une atmosphère constituée d'un mélange de gaz inerte et d'hydrogène dont la teneur volumique en hydrogène est comprise entre 5 et 100%, équipé d'une section de chauffage rapide à induction et d'une section de refroidissement rapide, ce procédé étant caractérisé par la mise en oeuvre dès la détection d'une rupture de bande ou d'un arrêt rapide du chauffage d'un ensemble de contre-mesures pour limiter le refroidissement de l'atmosphère présente dans le four, ces contre-mesures comprenant une injection de gaz inerte, en particulier d'azote, en plusieurs points dans le four et la chambre, et/ou un circuit de contournement (by-pass) d'échangeurs de refroidissement et/ou un dispositif pour stopper le débit de recirculation des ventilateurs, notamment une commande de fermeture de vannes ou volets, ou un frein électrique via un régulateur de fréquence sur l'alimentation du moteur des ventilateurs.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :

Fig.1 est une coupe verticale schématique d'un four selon l'état de la technique.
Fig.2 est une coupe verticale schématique d'une variante de réalisation de four selon l'état de la technique.
Fig.3 est une coupe verticale schématique d'une autre variante de réalisation de four selon l'état de la technique ;
Fig.4 est également une coupe verticale schématique d'un four selon l'état de la technique.

Fig.5 est une coupe verticale schématique d'un four à induction selon l'invention.

Fig.6 est une variante de réalisation d'un four à induction selon l'invention.

Fig.7 est une autre variante de réalisation d'un four selon l'invention.

Fig.8 est une autre variante de réalisation d'un four selon l'invention.

Fig.9 illustre trois panaches d'air correspondant à des instants successifs, et

Fig.10 illustre des courbes iso-concentration en air successives.

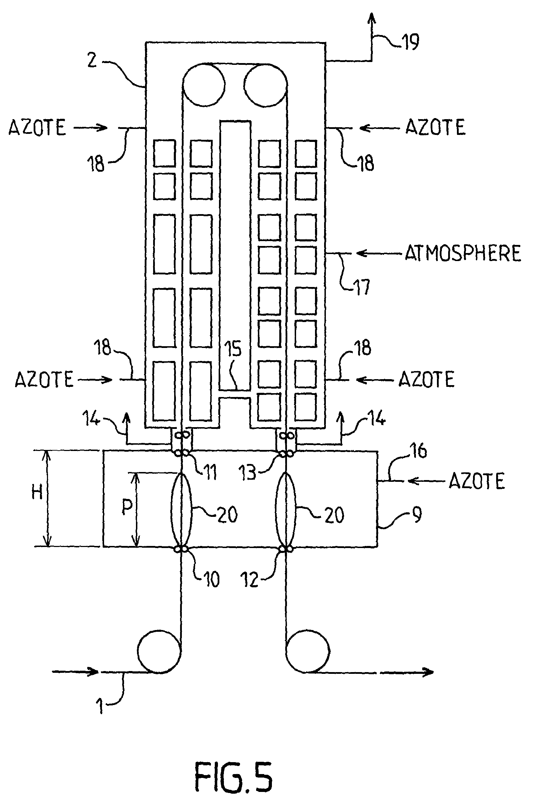

En se reportant aux dessins on peut voir que la Figure 5 représente de façon schématique un exemple de réalisation de l'invention.

L'invention propose un dispositif permettant de limiter le risque de formation d'une atmosphère explosive dans le four d'une ligne continue de traitement thermique de bandes métalliques dont les sections sont sous une atmosphère constituée d'un mélange de gaz inerte, en particulier d'azote, et d'hydrogène dont la teneur volumique en hydrogène est comprise entre 5 et 100%, équipé d'une section de chauffage rapide à induction et d'une section de refroidissement rapide, caractérisé en ce que le four 2 comprend :

- une chambre 9 maintenue sous azote, à une pression supérieure à la pression atmosphérique, notamment à une pression relative d'au moins 20daPa,
- un dispositif 10 d'entrée de la bande dans la chambre 9, à partir de l'air atmosphérique,
- un dispositif 11 de séparation d'atmosphère et d'entrée de la bande dans le four 2, équipé d'un soutirage 14,
- un dispositif 13 de séparation d'atmosphère et de sortie de la bande du four 2, équipé d'un soutirage 14,
- un dispositif 12 de sortie de la bande de la chambre 9 vers l'air atmosphérique.

Le dispositif selon l'invention est également caractérisé en ce que la distance H entre les dispositifs 10 et 11 d'une part, et entre les dispositifs 12 et 13 d'autre part, est supérieure à la longueur P du panache d'air 20 créé dans la chambre 9 en cas de dépression dans le four provoqué par un arrêt brutal du chauffage.

Selon l'invention, la longueur P à l'instant T du panache d'air 20 créé dans la chambre 9 est caractérisée comme étant la longueur suivant l'axe du panache de l'enveloppe définie par une iso-concentration en air dans l'azote égale à celle qui correspondrait à la Limite Supérieure d'Explosivité s'il s'agissait d'un mélange entre l'air et l'atmosphère gaz neutre ou N2 +H2 présente dans le four. Autrement dit, la concentration en air dans l'azote à l'intérieur de cette enveloppe du panache 20 est supérieure à ladite limite, tandis que la concentration en air dans l'azote autour de cette enveloppe du panache 20 n'a pas encore atteint cette limite.

Le dispositif selon l'invention est également caractérisé en ce que le volume de la chambre 9 est supérieur ou égal au volume V pour lequel, en cas d'arrêt brutal du chauffage du four, le débit d'air entrant jusqu'à l'instant T conduirait à une concentration en air dans l'azote dans ce volume égale à celle qui correspondrait à la Limite Supérieure d'Explosivité s'il s'agissait d'un mélange entre l'air et l'atmosphère gaz neutre ou N2+H2 présente dans le four.

Les dispositifs 11 et 13 sont destinés à réaliser une séparation d'atmosphère entre le four à haute teneur en hydrogène et la chambre 9 sous azote. Selon un exemple de réalisation de l'invention, ils sont constitués de deux ensembles de deux rouleaux situés de part et d'autre de la bande. Selon un autre exemple de réalisation de l'invention, ils sont constitués de deux ensembles de rouleaux et ou de volets. Une extraction de l'atmosphère est réalisée entre les deux ensembles de rouleaux et ou volets de sorte que les écoulements d'atmosphère se fassent du four 2 vers l'extraction 14 et de la chambre 9 vers l'extraction 14 sans échange d'atmosphère entre le four 2 et la chambre 9. Les pressions du four 2 et de la chambre 9 sont maintenues très proches afin de limiter le débit d'extraction 14 et donc l'appoint en atmosphère 17 nécessaire pour maintenir le four 2 à son niveau de pression et l'appoint en azote 16 pour maintenir la chambre 9 à son niveau de pression. La pression dans la chambre 9, lors du fonctionnement normal du chauffage du four, est de préférence égale ou légèrement supérieure à la pression dans le four. Lorsque le chauffage s'arrête rapidement, le four passe en dépression, ce qui entraîne la mise en dépression de la chambre 9 relativement à la pression atmosphérique, du gaz inerte, en particulier de l'azote, s'écoulant de la chambre 9 vers le four 2.

L'implantation des dispositifs 10,12 et 11,13 selon l'invention est réalisée de sorte que respectivement les dispositifs 10 et 12 et les dispositifs 11 et 13 soient à la même altitude afin que les pressions de gaz en amont et en aval de ces dispositifs soient identiques pour éviter la circulation de gaz par effet cheminée ou une différence de poids de colonne de gaz.

Par ailleurs, l'invention inclut un tunnel de liaison 15, en partie basse du four, entre le brin montant et le brin descendant du four de sorte de mettre en communication l'atmosphère des brins montant et descendant en partie basse du four pour participer à l'équilibrage des pressions et réduire le débit de soutirage requis au niveau des dispositifs 11 et 13.

Toujours dans le but de limiter le niveau de dépression atteint dans le four et limiter la durée du temps T pendant lequel le four est sous dépression, l'invention consiste également en un procédé permettant de limiter le risque de formation d'une atmosphère explosive dans le four d'une ligne continue de traitement thermique de bandes métalliques dont les sections sont sous une atmosphère constituée d'un mélange de gaz inerte, en particulier d'azote, et d'hydrogène dont la teneur volumique en hydrogène est comprise entre 5 et 100%,

le four étant équipé d'une section de chauffage rapide à induction et d'une section de refroidissement rapide, caractérisé par la mise en oeuvre dès la détection d'une rupture de bande ou d'un arrêt rapide du chauffage d'un ensemble de contre-mesures pour limiter le refroidissement de l'atmosphère présente dans le four, ces contre-mesures comprenant l'injection de gaz inerte, en particulier d'azote, en plusieurs points dans le four 2 et la chambre 9, et/ou un circuit de contournement (by-pass) d'échangeurs de refroidissement et/ou un dispositif pour stopper le débit de recirculation des ventilateurs.

Le dispositif pour stopper le débit de recirculation des ventilateurs peut consister en une commande de la fermeture de vannes ou volets ou en un frein électrique via un régulateur de fréquence sur l'alimentation du moteur des ventilateurs.

L'invention prévoit un ou plusieurs points 16 d'injection d'azote dans la chambre 9 et un ou plusieurs points 18 d'injection d'azote dans le four 2. Un ou plusieurs points d'échappement 19 équipés d'un dispositif d'ouverture par excès de pression permettent d'éviter que la pression dans le four ne dépasse sa valeur nominale de service. Ils sont par exemple placés en partie haute du four.

Selon l'exemple préféré de réalisation de l'invention pour les lignes de recuit brillant de l'acier inoxydable, la distance H est limitée à celle nécessaire pour être égale à la longueur P du panache de sorte de limiter la hauteur du point le plus chaud de la bande dans le four. Le volume de la chambre 9 est obtenue en augmentant la largeur et ou la longueur de la chambre.

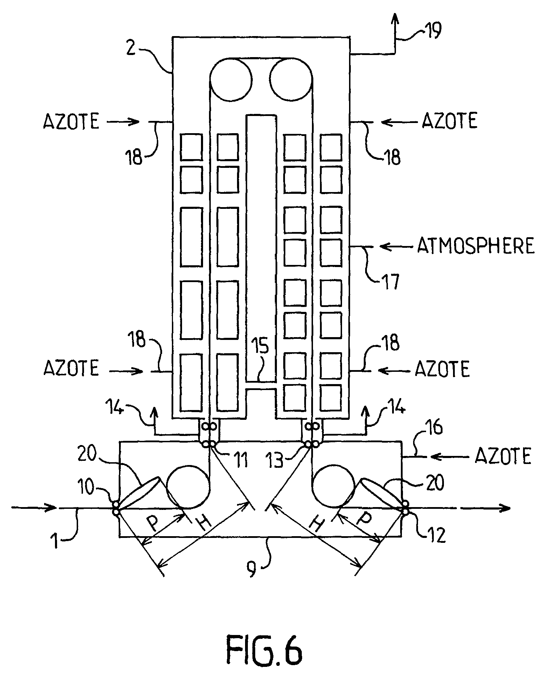

Selon un autre exemple de réalisation de l'invention représenté en Figure 6, l'arrivée et le départ de la bande sont réalisés sur le côté de la chambre 9.

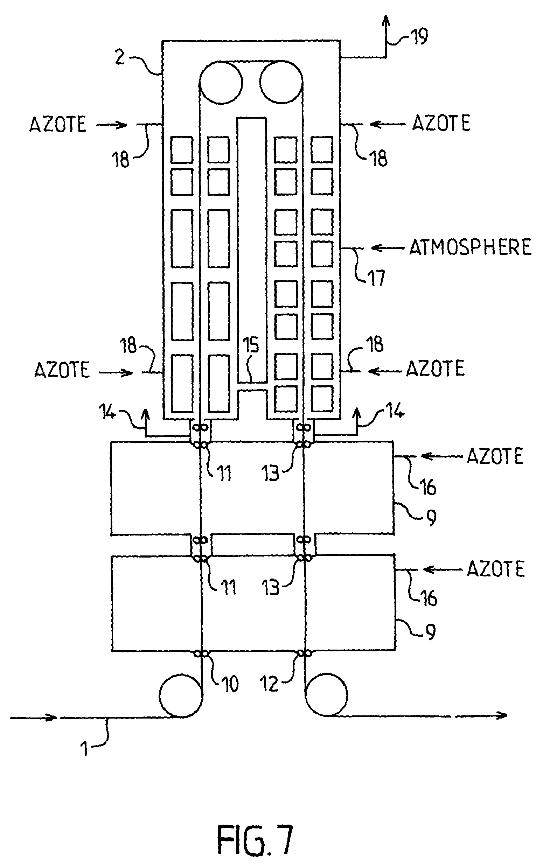

Selon un autre exemple de réalisation de l'invention représenté en Figure 7, la chambre 9 est remplacée par une succession de plusieurs, deux ou davantage, chambres en série 9 maintenues sous azote, avec des dispositifs 11 et 13 de séparation d'atmosphère entre chacune de ces chambres.

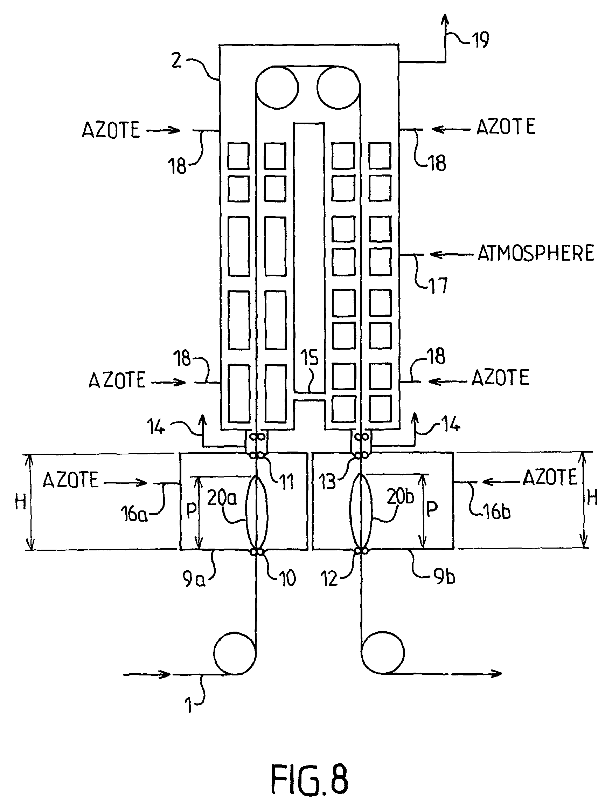

Selon un autre exemple de réalisation de l'invention représenté en Figure 8, la chambre 9 est remplacée par deux chambres 9a, 9b placées l'une en entrée de four, la seconde en sortie de four.

A présent on décrit brièvement comment est déterminée la longueur P du panache d'air dans la chambre 9. La longueur P est gouvernée par les lois régissant la physique des jets.

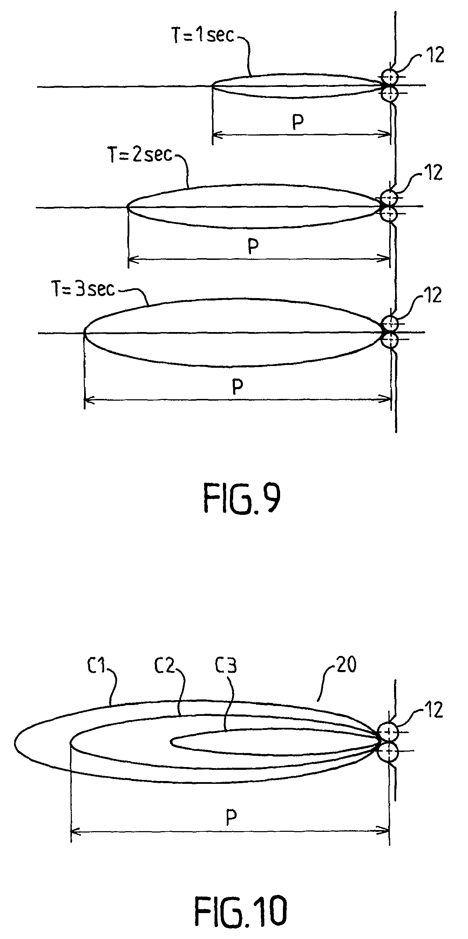

Dans l'exemple de réalisation de l'invention représenté en Figure 5, il s'agit d'un jet plan d'air noyé dans l'azote. Ce jet plan turbulent se propage et se dilue dans l'azote, c'est à dire que la vitesse du jet ainsi que sa concentration en air décroissent lorsque l'on s'éloigne de la fente d'entrée du dispositif 10 ou du dispositif 12. Comme représenté en Figure 9, le développement du panache est instationnaire. La longueur P augmente pendant le temps T où le four est en dépression.

La longueur P peut être déterminée à partir d'un modèle de mécanique des fluides numérique (Computational Fluid Dynamic), à partir d'une géométrie et d'une dépression calculée, les champs des vitesses et de concentration sont calculés dans tout le volume de la chambre et au cours du temps. En fonction des résultats, notamment de la concentration en air à l'entrée de la chambre sous haute teneur en H2, la longueur H pourra être modifiée.

Le calcul de la longueur P est réalisé pour le panache se développant à partir du dispositif d'entrée 10 car, en raison de l'entraînement lié à la vitesse de défilement de la bande, ce panache sera plus long que celui généré au niveau du dispositif de sortie 12 où la bande circule en sens inverse du développement du panache.

La propagation du panache dans l'azote est à prendre en compte ; tant que le panache généré au dispositif 10 n'est pas arrivé au dispositif 11, aucune quantité d'air n'arrive dans le four sous hydrogène. Le risque de formation d'une atmosphère explosive est donc nul.

Si on appelle W la vitesse de propagation du panache, la longueur Pmax du panache telle qu'aucune quantité d'air n'arrive au dispositif 11 à l'instant T où le four est en dépression est égale à T x W. Cette longueur Pmax peut être considérée comme trop sécuritaire ; en effet, la diffusion fait que même si le panache s'est propagé jusqu'au dispositif 11, la concentration en air du panache pénétrant dans la zone sous hydrogène restera faible et donc au final la concentration d'air dans le mélange N2H2 sera non dangereuse.

Selon l'invention, on définit la longueur P à l'instant T comme étant la longueur suivant l'axe du panache de l'enveloppe définie par une iso-concentration en air dans l'azote égale à celle qui correspondrait à la Limite Supérieure d'Explosivité s'il s'agissait d'un mélange entre l'air et l'atmosphère N2H2 présente dans le four.

Comme représenté en Figure 10, la panache 20 est constitué d'une succession d'iso-concentrations en air dans l'azote. Les courbes C1, C2 et C3 sont des représentations de trois iso-concentrations en air dans l'azote, la concentration de C3 étant plus importante que celle de C2, laquelle est plus importante que celle de C1. La longueur P selon l'invention est par exemple celle suivant l'axe du panache de l'enveloppe définie par l'iso-concentration C2.

Pour garantir, pendant le temps T où la chambre 9 est en dépression, une bonne diffusion du panache d'air dans N2, il faut que le volume de la chambre V soit suffisament grand pour que ce volume d'azote ne soit renouvelé que très faiblement par l'air pendant la durée de la dépression.

Le volume de la chambre 9 selon l'invention est supérieur ou égal au volume V pour lequel le débit d'air entrant jusqu'à l'instant T conduirait à une concentration en air dans l'azote dans ce volume égale à celle qui correspondrait à la Limite Supérieure d'Explosivité s'il s'agissait d'un mélange entre l'air et l'atmosphère N2H2 présente dans le four.

Le débit volumique d'air Q entrant par les dispositifs 10 et 12, dépend du coefficient de perte de charge $\zeta$ de ces dispositifs et de la surface débitante S aux dispositifs. Il s'exprime à partir des équations (A) où U est la vitesse de l'air entrant par les dispositifs 10 et 12.

$$(A) \qquad U = \sqrt{\frac{2\,\Delta P}{\rho_{air}\,\xi}}$$

$$Q = U \times S$$

Le débit entrant dépend donc de la différence de pression $\Delta P$ entre la pression atmosphérique et la pression à l'intérieur de la chambre 9. La notation $\rho_{air}$ désigne la masse volumique de l'air. L'évolution au cours du temps de la pression dans la chambre doit être évaluée afin de déterminer le débit d'air instantané entrant et l'évolution de la concentration globale d'air dans le volume V.

L'évolution de la pression globale dans la chambre 9 et le four peut être estimée par un modèle transitoire qui à chaque instant fait un bilan de matière dans la chambre 9 et le four (débit azote entrant, débit mélange gazeux sortant) et un bilan enthalpique permettant de connaître la température du volume de gaz de la chambre 9 et du four. A partir de ces conditions, débit matière et température, la pression est calculée. Les contre-mesures sont prises en compte par le modèle, par exemple :

- le circuit de contournement (by-pass) est pris en compte dans le bilan enthalpique, par le biais du débit de gaz frais réinjecté dans le volume.
- le volume de purge en azote est pris en compte dans le bilan de matière.

La concentration en air dans l'azote de la chambre 9 peut être définie selon différentes méthodes de calcul. A titre d'exemple, on utilise ci-dessous une méthode classique utilisée en Génie des Procédés pour un réacteur parfaitement agité dans lequel la concentration est uniforme dans tout le volume.

La concentration en air dans l'azote s'exprime à partir de l'équation (B) reprise ci-dessous,

$$(B) \qquad [A]_T = [A]_{entrant} - \left( [A]_{entrant} - [A]_0 \right) \exp\left( \frac{-T}{t_{geom}} \right)$$

dans laquelle $[A]_T$ est la concentration volumique en air dans l'azote dans la chambre 9 à l'instant T où la chambre 9 repasse en pression,

$[A]_{entrant}$ est la concentration en air dans le gaz entrant dans la chambre 9 par les dispositifs 10 et 12,

$[A]_0$ est la concentration initiale en air dans la chambre 9 avant qu'elle ne passe en dépression,

$t_{geom}$ est le temps géométrique de la chambre 9. Le temps géométrique $t_{geom}$ s'exprime par l'équation (C) reprise ci-dessous,

$$(C) \qquad t_{geom} = \frac{V}{Q}$$

dans laquelle V est le volume de la chambre 9 et Q est le débit volumique entrant dans la chambre 9 par les dispositifs 10 et 12.

A partir des équations (A), (B) et (C), il est possible de déterminer le volume V de la chambre 9 en fonction de la concentration en air dans l'azote de la chambre.

La valeur $[A]_T$ de concentration en air dans l'azote de la chambre 9 retenue pour le dimensionnement du volume de la chambre 9 est par exemple celle de la concentration en air qui correspondrait à la Limite Supérieure d'Explosivité s'il s'agissait d'un mélange entre l'air et l'atmosphère N2H2 présente dans le four. Elle serait ainsi de 0.3 (30% d'air) s'il s'agissait d'une atmosphère N2H2 à 95% en volume de H2. Les valeurs de $[A]_{entrant}$ et $[A]o$ seraient respectivement 1.0 (100% d'air) et 0.0 (100% d'azote). Le calcul est par exemple réalisé pour la différence de pression $\Delta P$ entre la pression atmosphérique et la pression à l'intérieur de la chambre 9 la plus importante atteinte pendant le passage en dépression de la chambre 9.

**Revendications**

**1.** Dispositif permettant de limiter le risque de formation d'une atmosphère explosive dans le four d'une ligne continue de traitement thermique de bandes métalliques dont les sections sont sous une atmosphère constituée d'un mélange de gaz inerte et d'hydrogène dont la teneur volumique en hydrogène est comprise entre 5 et 100%, équipé d'une section de chauffage rapide à induction et d'une section de refroidissement rapide, comprenant :

- une chambre (9) maintenue sous gaz inerte, à l'entrée de la section de chauffage rapide du four et à la sortie de la section de refroidissement rapide,
- un dispositif (10) d'entrée de la bande dans la chambre (9), à partir de l'air atmosphérique,
- un dispositif (11) de séparation d'atmosphère et d'entrée de la bande dans la section de chauffage du four depuis la chambre (9) sous gaz inerte,
- un dispositif (13) de séparation d'atmosphère et de sortie de la bande de la section de refroidissement rapide du four, et
- un dispositif (12) de sortie de la bande de la chambre (9) vers l'air atmosphérique,

**caractérisé en ce que:**

- la pression dans la chambre (9) est supérieure à la pression atmosphérique lorsque le chauffage du four fonctionne normalement,
- la chambre est sous gaz inerte, et
- les dispositifs (11, 13) de séparation d'atmosphère sont équipés d'un soutirage (14).

**2.** Dispositif selon la revendication 1, **caractérisé en ce que** la pression relative dans la chambre (9) maintenue sous gaz inerte, lorsque le chauffage du four fonctionne normalement, est au moins égale à 20 daPa.

**3.** Dispositif selon la revendication 1 ou 2, **caractérisé en ce que** la pression dans la chambre (9) maintenue sous gaz inerte, lorsque le chauffage du four fonctionne normalement, est égale ou supérieure à la pression de gaz dans le four (2).

**4.** Dispositif selon l'une quelconque des revendications 1 à 3, **caractérisé en ce que** le gaz inerte est de l'azote.

**5.** Dispositif selon l'une quelconque des revendications précédentes, **caractérisé en ce que** la distance (H) entre le dispositif (10) d'entrée de la bande dans la chambre (9) et le dispositif (11) de séparation d'atmosphère et d'entrée de la bande dans la section de chauffage rapide du four, d'une part, et entre le dispositif (13) de séparation d'atmosphère et de sortie de la bande de la section de refroidissement rapide du four, et le dispositif (12) de sortie de la bande de la chambre (9), d'autre part, est supérieure à la longueur (P) du panache d'air (20) créé dans la chambre (9) en cas de dépression dans le four provoqué par un arrêt brutal du chauffage.

**6.** Dispositif selon la revendication 5, **caractérisé en ce que** la longueur (P) à un instant donné du panache d'air (20) créé dans la chambre (9) est choisie comme étant la longueur suivant l'axe du panache (C2) de l'enveloppe définie par une iso-concentration en air dans le gaz inerte égale à celle qui correspondrait à la Limite Supérieure d'Explosivité s'il s'agissait d'un mélange entre l'air et l'atmosphère (gaz inerte + H2) présente dans le four.

**7.** Dispositif selon l'une quelconque des revendications précédentes, **caractérisé en ce que** le volume de la chambre (9) est supérieur ou égal au volume (V) pour lequel le débit d'air entrant jusqu'à l'instant où la pression dans le four redevient égale à la pression atmosphérique conduirait à une concentration en air dans le gaz inerte dans ce volume égale à celle qui correspondrait à la Limite Supérieure d'Explosivité s'il s'agissait d'un mélange entre l'air et l'atmosphère (gaz inerte + H2) présente dans le four.

**8.** Dispositif selon l'une quelconque des revendications précédentes, **caractérisé en ce que** les dispositifs (11,13) destinés à réaliser une séparation d'atmosphère entre le four et la chambre (9) comprennent deux ensembles de deux rouleaux ou de volets situés de part et d'autre de la bande et qu'une extraction (14) de l'atmosphère est réalisée entre les deux ensembles de rouleaux et ou volets de sorte que les écoulements d'atmosphère se fassent du four (2) vers l'extraction (14) et de la chambre (9) vers l'extraction (14) sans échange d'atmosphère entre le four (2) et la chambre (9).

9. Dispositif selon l'une quelconque des revendications précédentes, **caractérisé en ce que** les dispositifs d'entrée et de sortie (10,12) et les dispositifs de séparation d'atmosphère (11,13) sont à la même altitude afin que les pressions de gaz en amont et en aval de ces dispositifs soient identiques.

10. Dispositif selon l'une quelconque des revendications précédentes, **caractérisé en ce qu'**un tunnel de liaison (15) est prévu en partie basse du four entre le brin montant du four et le brin descendant afin de mettre en communication l'atmosphère des brins montant et descendant en partie basse du four pour participer à l'équilibrage des pressions et réduire le débit de soutirage requis au niveau des dispositifs de séparation d'atmosphère (11 et 13).

11. Dispositif selon l'une quelconque des revendications précédentes, **caractérisé en ce que** sont prévus un ou plusieurs points (16) d'injection d'azote dans la chambre (9) et un ou plusieurs points (18) d'injection d'azote dans le four (2).

12. Dispositif selon l'une quelconque des revendications précédentes, **caractérisé en ce qu'**il comporte une succession de plusieurs chambres en série (9) avec des dispositifs (11, 13) de séparation d'atmosphère entre chacune de ces chambres.

13. Dispositif selon l'une quelconque des revendications précédentes, **caractérisé en ce qu'**il comporte deux chambres (9a, 9b) placées l'une en entrée de four, la seconde en sortie de four.

14. Dispositif selon les revendications 1 et 11, permettant de limiter le niveau de dépression atteint dans le four (2) et la chambre (9) et le risque de formation d'une atmosphère explosive dans le four, **caractérisé par** la mise en oeuvre de l'injection de gaz inerte, en particulier d'azote, en plusieurs points dans le four (2) et la chambre (9), et/ou un circuit de contournement (by-pass) d'échangeurs de refroidissement et/ou un dispositif pour stopper le débit de recirculation des ventilateurs, dès la détection d'une rupture de bande ou d'un arrêt rapide du chauffage.

15. Dispositif selon la revendication 14, **caractérisé en ce que** le dispositif pour stopper le débit de recirculation des ventilateurs comprend une commande de fermeture de vannes ou volets, et/ou un frein électrique via un régulateur de fréquence sur l'alimentation du moteur des ventilateurs.

**Patentansprüche**

1. Vorrichtung zur Begrenzung der Gefahr der Bildung einer explosiven Atmosphäre in dem Ofen einer kontinuierlichen Linie für die Wärmebehandlung von Metallbändern, dessen Abschnitte sich in einer Atmosphäre befinden, welche aus einer Mischung aus Inertgas und Wasserstoff gebildet ist, wobei der Volumengehalt an Wasserstoff zwischen 5 und 100% liegt, wobei der Ofen mit einem Abschnitt zur schnellen Erwärmung durch Induktion und einem Abschnitt zur schnellen Abkühlung versehen ist, mit:

- einer unter Inertgas gehaltenen Kammer (9) am Einlass des Schnellerwärmungsabschnitts des Ofens und am Auslass des Schnellabkühlungsabschnitts,
- einer Vorrichtung (10) zum Einlass des Bandes in die Kammer (9) aus der atmosphärischen Luft,
- einer Vorrichtung (11) zum Trennen der Atmosphäre und zum Einlass des Bandes in den Erwärmungsabschnitt des Ofens aus der unter Inertgas gehaltenen Kammer (9),
- einer Vorrichtung (13) zum Trennen der Atmosphäre und zum Auslassen des Bandes aus dem Schnellabkühlungsabschnitt des Ofens, und
- einer Vorrichtung (12) zum Auslassen des Bandes aus der Kammer (9) in Richtung der atmosphärischen Luft,

**dadurch gekennzeichnet, dass**:

- der Druck in der Kammer (9) höher als der Atmosphärendruck ist, wenn die Erwärmung des Ofens normal funktioniert,
- die Kammer unter Inertgas beaufschlagt ist, und
- die Vorrichtungen (11, 13) zur Atmosphärentrennung mit einem Abzug (14) versehen sind.

2. Vorrichtung nach Anspruch 1, **dadurch gekennzeichnet, dass** der relative Druck in der unter Inertgas gehaltenen Kammer (9) bei normal arbeitender Erwärmung des Ofens mindestens gleich 20daPa ist.

3. Vorrichtung nach Anspruch 1 oder 2, **dadurch gekennzeichnet, dass** der Druck in der unter Inertgas gehaltenen Kammer (9) bei normal arbeitender Erwärmung des Ofens gleich oder höher als der Druck des Gases in dem Ofen (2) ist.

4. Vorrichtung nach einem der Ansprüche 1 bis 3, **dadurch gekennzeichnet, dass** das Inertgas Stickstoff ist.

5. Vorrichtung nach einem der vorhergehenden Ansprüche, **dadurch gekennzeichnet, dass** der Abstand (H) zwischen der Vorrichtung (10) zum Einlass des Bandes in die Kammer (9) und der Vorrichtung (11) zum Trennen der Atmosphäre und zum Einlass des Bandes in den Schnellerwärmungsabschnitt des Ofens einerseits und zwischen der Vorrichtung (13) zum Trennen der Atmosphäre und zum Auslassen des Bandes aus dem Schnellabkühlungsabschnitt des Ofens und der Vorrichtung (12) zum Auslassen des Bandes aus der Kammer (9) andererseits größer als die Länge (P) der Luftblase (20) ist, die in der Kammer (9) im Falle eines durch abruptes Anhalten des Erwärmens bewirkten Unterdrucks in dem Ofen erzeugt wird.

6. Vorrichtung nach Anspruch 5, **dadurch gekennzeichnet, dass** die in einem gegebenen Moment bestehende Länge (P) der in der Kammer (9) erzeugten Luftblase (20) als die Länge entlang der Blasenachse (C2) der Hülle gewählt ist, welche durch eine Isokonzentration von Luft in dem Inertgas definiert ist, die gleich derjenigen ist, welche der oberen Explosionsgrenze entspräche, wenn es sich um eine Mischung aus Luft und der in dem Ofen vorhandenen Atmosphäre (Inertgas + H2) handeln würde.

7. Vorrichtung nach einem der vorhergehenden Ansprüche, **dadurch gekennzeichnet, dass** das Volumen der Kammer (9) größer als oder gleich dem Volumen (V) ist, bei welchem der Luftstrom, der bis zu dem Moment eintritt, in dem der Druck in dem Ofen wieder gleich dem Atmosphärendruck wird, zu einer Konzentration von Luft in dem Inertgas in diesem Volumen führen würde, die gleich derjenigen ist, welche der oberen Explosionsgrenze entspräche, wenn es sich um eine Mischung aus Luft und der in dem Ofen vorhandenen Atmosphäre (Inertgas + H2) handeln würde.

8. Vorrichtung nach einem der vorhergehenden Ansprüche, **dadurch gekennzeichnet, dass** die Vorrichtungen (11, 13) zum Bewirken einer Atmosphärentrennung zwischen dem Ofen und der Kammer (9) zwei Anordnungen aus zwei Rollen oder Klappen aufweisen, die zu beiden Seiten der Bandes angeordnet sind, und dass ein Abziehen (14) der Atmosphäre zwischen den beiden Rollen- oder Klappenanordnungen derart erfolgt, dass die Atmosphärenströmungen von dem Ofen (2) zu dem Abzug (14) und von der Kammer (9) zu dem Abzug (14) ohne Austausch von Atmosphäre zwischen dem Ofen (2) und der Kammer (9) verlaufen.

9. Vorrichtung nach einem der vorhergehenden Ansprüche, **dadurch gekennzeichnet, dass** die Einlass- und Auslassvorrichtungen (10, 12) und die Atmosphärentrennvorrichtungen (11, 13) sich auf gleicher Höhe befinden, damit die Gasdrücke stromaufwärts und stromabwärts dieser Vorrichtungen identisch sind.

10. Vorrichtung nach einem der vorhergehenden Ansprüche, **dadurch gekennzeichnet, dass** ein Verbindungstunnel (15) im unteren Teil des Ofens zwischen dem aufsteigenden Strang des Ofens und dem absteigenden Strang vorgesehen ist, um die Atmosphäre des aufsteigenden und den absteigenden Strangs im unteren Teil des Ofens zu verbinden, um bei dem Druckausgleich mitwirken und den an den Atmosphärentrennvorrichtungen (11 und 13) erforderlichen Abzugsdurchsatz zu reduzieren.

11. Vorrichtung nach einem der vorhergehenden Ansprüche, **dadurch gekennzeichnet, dass** eine oder mehrere Stellen (16) zum Einspritzen von Stickstoff in die Kammer (9) und eine oder mehrere Stellen (18) zum Einspritzen von Stickstoff in den Ofen (2) vorgesehen sind.

12. Vorrichtung nach einem der vorhergehenden Ansprüche, **dadurch gekennzeichnet, dass** sie eine Abfolge von mehreren in Reihe angeordneten Kammern (9) mit Atmosphärentrennvorrichtungen (11, 13) zwischen jeder dieser Kammern aufweist.

13. Vorrichtung nach einem der vorhergehenden Ansprüche, **dadurch gekennzeichnet, dass** sie zwei Kammern (9a, 9b) aufweist, von denen eine am Einlass des Ofens und die zweite am Auslass des Ofens angeordnet ist.

**14.** Vorrichtung nach den Ansprüchen 1 und 11, welche das Begrenzen des in dem Ofen (2) und der Kammer (9) erreichten Unterdruckpegels und die Gefahr der Bildung einer explosiven Atmosphäre in dem Ofen ermöglicht, **gekennzeichnet durch** das Durchführen des Einspritzens von Inertgas, insbesondere von Stickstoff, an mehreren Stellen in den Ofen (2) und die Kammer (9) und/oder einen Kühltauscher-Bypasskreislauf und/oder eine Vorrichtung zum Anhalten der Gebläsezirkulationsströmung bei der Erkennung eines Bandrisses oder eines schnellen Anhaltens der Erwärmung.

**15.** Vorrichtung nach Anspruch 14, **dadurch gekennzeichnet, dass** die Vorrichtung zum Anhalten der Gebläsezirkulationsströmung eine Ventil- oder Klappenschließsteuerung und/oder eine elektrische Bremse mittels eines auf die Versorgung des Motors der Ventilatoren wirkenden Frequenzreglers aufweist.

**Claims**

**1.** Device for limiting the risk of forming an explosive atmosphere in the furnace of a continuous metal strip heat treatment line, the sections of which are under an atmosphere consisting of a mixture of inert gas and hydrogen, the hydrogen content of which is between 5 and 100% by volume, said system being equipped with a rapid induction heating section and a rapid cooling section, comprising:

  - a chamber (9) maintained under inert gas, at the inlet of the rapid heating section of the furnace and at the outlet of the rapid cooling section,
  - an inlet device (10) at which the strip enters the chamber (9) from the atmospheric air;
  - an atmosphere separating inlet device (11) via which the strip enters the heating section of the furnace from the chamber (9) under inert gas,
  - an atmosphere separating outlet device (13) via which the strip exits the rapid cooling section of the furnace,
  - an outlet device (12) via which the strip exits the chamber (9) into the atmospheric air,

  **characterized in that**:

  - the pressure in the chamber (9) being above atmospheric pressure when the heating of the furnace is operating normally,
  - the chamber is under inert gas, and
  - the atmosphere separating devices (11, 13) outlet being fitted with a gas take-off (14); and

**2.** Device as claimed in claim 1, **characterized in that** the relative pressure in the chamber (9) maintained under inert gas, when the heating of the furnace is operating normally, is at least 20 daPa.

**3.** Device as claimed in claim 1 or 2, **characterized in that** the pressure in the chamber (9) maintained under inert gas, when the heating of the furnace is operating normally, is equal to or greater than the gas pressure in the furnace (2).

**4.** Device as claimed in any one of claims 1 to 3, **characterized in that** the inert gas is nitrogen.

**5.** Device as claimed in any one of the preceding claims, **characterized in that** the distance (H) between the inlet device (10) via which the strip enters the chamber (9) and the atmosphere-separating inlet device (11) via which the strip enters the rapid heating section of the furnace on the one hand, and between the atmosphere-separating outlet device (13) via which the strip exits the rapid cooling section of the furnace and the outlet device (12) via which the strip exits the chamber (9) on the other, is greater than the length (P) of the air plume (20) created in the chamber (9) in the event of underpressure in the furnace caused by the heating suddenly stopping.

**6.** Device as claimed in claim 5, **characterized in that** the length (P) at a given instant of the air plume (20) created in the chamber (9) is chosen to be the length along the axis of the plume (C2) of the envelope defined by an air isoconcentration in the inert gas equal to that which would correspond to the UEL (upper explosion limit) if a mixture of air and the atmosphere (inert gas + $H_2$) were to be present in the furnace.

**7.** Device as claimed in any one of the preceding claims, **characterized in that** the volume of the chamber (9) is equal to or greater than the volume (V) for which the flow rate of incoming air up to the instant when the pressure in the furnace again becomes equal to atmospheric pressure would result in an air concentration in the inert gas in this volume equal to that which would correspond to the UEL if a mixture of air and the atmosphere (inert gas + $H_2$) were to be present in the furnace.

8. Device as claimed in any one of the preceding claims, **characterized in that** the devices (11, 13) intended for separating the atmosphere between the furnace and the chamber (9) comprise two sets of two rollers or flaps located on either side of the strip and **in that** the atmosphere is extracted at the take-off (14) between the two sets of rollers and/or flaps in such a way that the atmosphere flows from the furnace (2) to the take-off (14) and flows from the chamber (9) to the take-off (14) without any exchange of atmosphere between the furnace (2) and the chamber (9).

9. Device as claimed in any one of the preceding claims, **characterized in that** the inlet and outlet devices (10, 12) and the atmosphere-separating devices (11, 13) are at the same height so that the gas pressures upstream and downstream of these devices are identical.

10. Device as claimed in any one of the preceding claims, **characterized in that** a linking tunnel (15) is provided in the lower part of the furnace between the ascending branch of the furnace and the descending branch so as to bring the atmosphere of the ascending and descending branches into communication with each other in the lower part of the furnace in order to help to balance the pressures and reduce the offtake rate required at the atmosphere-separating devices (11 and 13).

11. Device as claimed in any one of the preceding claims, **characterized in that** one or more points (16) for injecting nitrogen into the chamber (9) and one or more points (18) for injecting nitrogen into the furnace (2) are provided.

12. Device as claimed in any one of the preceding claims, **characterized in that** it includes a succession of several chambers (9) in series with atmosphere-separating devices (11, 13) between each of these chambers.

13. Device as claimed in any one of the preceding claims, **characterized in that** it comprises two chambers (9a, 9b), one placed at the inlet of the furnace and the other at the outlet of the furnace.

14. Device as claimed in claims 1 and 11, making it possible to limit the level of underpressure reached in the furnace (2) and the chamber (9) and to limit the risk of forming an explosive atmosphere in the furnace, **characterized by** implementing an injection of inert gas, particularly nitrogen, at several points into the furnace (2) and the chamber (9), and/or a cooling exchanger by-pass circuit and/or a device for stopping the recirculation flow from the fans as soon as a break in the strip or a rapid stoppage of the heating is detected.

15. Device as claimed in claim 14, **characterized in that** the device for stopping the recirculation flow from the fans comprises a control for shutting off the valves or flaps and/or an electrical brake via a frequncy regulator on the supply for the motor of the fans.

FIG.1

Etat de la Technique

FIG.2

Etat de la Technique

# FIG.3

Etat de la Technique

# FIG.4

Etat de la Technique

FIG.5

FIG.6

FIG.7

FIG.8

T=1sec

P

12

T=2sec

P

12

T=3sec

P

12

FIG.9

C1  C2  C3  20

12

P

FIG.10

**RÉFÉRENCES CITÉES DANS LA DESCRIPTION**

**Documents brevets cités dans la description**

- WO 0052965 A
- FR 2809418